# EUROPEAN PATENT APPLICATION

(11) **EP 1 667 007 A1**
(43) Date of publication of application: **07.06.2006**
(21) Application number: 04773075.9
(22) Date of filing: 08.09.2004
(51) Int. Cl.: G06F 1/00, G06F 9/06, G06F 11/00

(54) **DATA UPDATE SYSTEM, DATA UPDATE DEVICE AND EXTERNAL STORAGE MEDIUM**

(30) Priority: 11.09.2003 JP 2003319446
(71) Applicant: MATSUSHITA ELECTRIC INDUSTRIAL CO., LTD., Kadoma-shi, Osaka 571-8501 (JP)
(72) Inventor: IIDA, Kentarou, Kanagawa 224-0054 (JP); TANAKA, Nobuaki, Kawasaki-shi, Kanagawa 211-0051 (JP); ADACHI, Takanosuke, Kanagawa 224-0054 (JP); YAMAMURO, Mitsuhisa, Kanagawa 224-0054 (JP)
(74) Representative: Grünecker, Kinkeldey, Stockmair & Schwanhäusser Anwaltssozietät
(86) International application number: PCT/JP2004/013402
(87) International publication number: WO 2005/026924

(57) **Abstract**

When update data stored in portable storage media are distributed to update data, the data updatable frequency can be freely restricted at the distribution source of the update data. A data updatable upper limit frequency and an update frequency at which data update is carried out are stored in an update-frequency data storing portion 112 of an external storage medium 103. On the basis of these update-frequency data, it is judged by an update permission judging portion 110 whether there is data update permission in a terminal 102. If there is update permission, the update data is delivered to an update data reading portion 109 in the terminal 102, and the data update is carried out on the basis of the update data by a post-update data restoring portion 107 of the terminal 102, and the post-update data is stored in an in-terminal data storing portion 104. When the data update is carried out, update-frequency data is updated by an update frequency updating portion 111.

## Description

### <Technical Field>

The present invention relates to a data updating system, a data updating device and an external storage medium with which data such as programs, etc. in an electronic device are updated.

### <Background Art>

An electronic device such as a personal computer, a portable communication terminal or the like generally and broadly adopts a data updating method of storing update data in a portable storage medium such as a flexible disc, CD-ROM, DVD-ROM, an IC chip or the like and making the electronic device read the update data thus stored to carry out a desired update work for the purpose of correction of bugs of programs, addition of functions, etc.

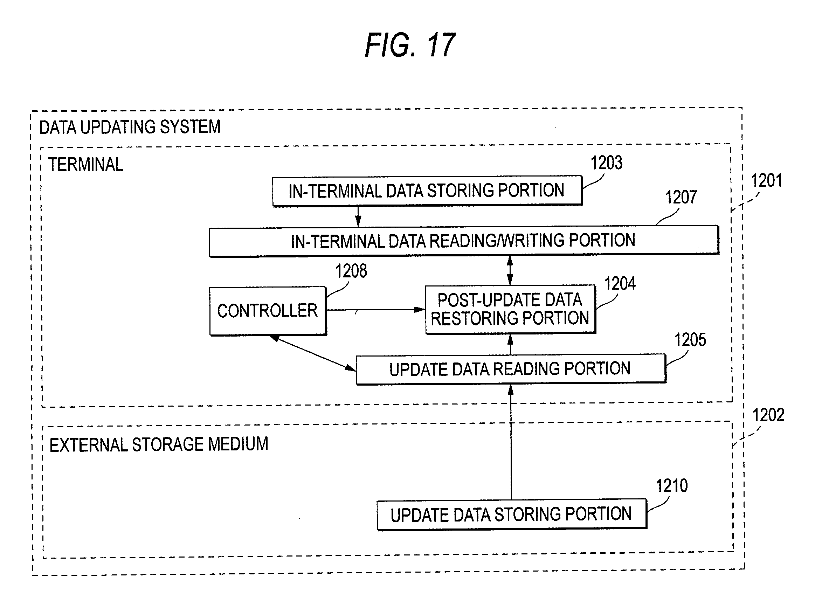

Fig. 17 shows a construction example of a conventional data updating system. In this prior art, update data are stored in an update data storage portion 1210 of an external storage medium 1202, and a terminal 1201 reads the update data through an update data reading portion 1205 under the control of a controller 1208. In the terminal 1201, pre-update data stored in an in-terminal data storage portion 1203 are read out through an in-terminal data reading/writing portion 1207, and post-update data are restored from the pre-update data and the update data read out from the external storage medium 1202 by a post-update data restoring portion 1204. The post-update data thus restored are stored into an in-terminal data storage portion 1203 through an in-terminal data reading/writing portion 1207.

For example, a data updating method as disclosed in JP-A-8-255104 (Patent Document 1) is known as a technique of restoring post-update data from pre-update data and update data. This data updating method transmits update data through a communication path such as a network or the like and carries out data update, and a data update procedure as described below is adopted. That is, at a transmission side device, the pre-update data and the post-update data are compared with each other to extract the differential data therebetween, and only the differential data are transmitted as the update data. At a reception side terminal device, the post-update data are restored from the pre-update data in the device and the differential data thus transmitted.

In the example of the Patent Document 1, a series of commands containing a COPY command for commanding a copy of a series of indicated characters into a file and an ADD command for commanding addition of a series of characters are prepared in the update differential data, whereby post-update data can be restored by executing the above two kinds of commands and also the data amount of the differential data to be transmitted can be reduced.

The data updating method as shown in Fig. 17 is used by software makers for supplying operating programs of electronic devices, etc. when the makers wish to update the data without withdrawing any electronic device at the user side. It takes much cost to withdraw the electronic devices, and by distributing storage media having update data stored therein to enable users themselves to update the data, it can be expected to reduce the withdrawing cost and enhance convenience to users.

When portable storage media are distributed while update data are stored in the storage media as described above, these storage media may be delivered to persons other than registered users who are assumed to be targeted by a distribution source such as a maker or the like of electronic devices. For example, when data update is charged, a user who paid the update fee may deliver his/her storage medium having update data stored therein to another unregistered user, and this user receiving the storage medium can also perform data update. Accordingly, the conventional data updating method as described above has a risk that the data update may be carried out more frequently than the update number of times which the distribution source of the update data permits.

### <Disclosure of the Invention>

The present invention has been implemented in view of the foregoing situation, and has an object to provide a data updating system, a data updating device and an external storage device with which when update data stored in portable storage media are distributed to update data, the data updatable frequency can be freely restricted at an update data distributing source.

According to the present invention, a data updating system for updating data in an electronic device by using update data stored in a portable storage medium includes: an update-frequency data storing unit for storing update-frequency data containing information on a frequency at which data update can be performed by using the update data; an update permission judging unit for judging on the basis of the update-frequency data the presence or absence of data update permission when data are updated by a data updating device for carrying out data update processing in the electronic device; an update data reading unit for reading the update data on the basis of the data update permission; an update frequency updating unit for updating the update-frequency data when the update data are read by the data updating device on the basis of the data update permission; and a post-update data restoring unit for restoring post-update data by using both the update data and the pre-update data or by using only the update data .

Accordingly, the update permission judging unit judges the presence or absence of the data update permission on the basis of the update-frequency data, and if there is data update permission, the update data are read in by the update data reading unit and the post-update data are restored by the post-update data restoring unit. When the data update is carried out, the update-frequency data is updated by the update frequency updating unit. When the frequency of the data update reaches a predetermined frequency, it is judged by the update permission judging unit that there is no update permission, and the update data is prohibited from being read from the portable storage medium. Therefore, the frequency of the data update can be restricted.

Furthermore, as a mode of the present invention, the data updating system described above includes an update data deleting unit for deleting the update data when it is judged by the update permission judging unit that there is no data update permission.

Accordingly, when the data update permission is extinguished, the update data can be deleted. Therefore, the update data can be prevented from being read by dishonest process, and the frequency of the data update can be surely restricted.

Furthermore, as a mode of the present invention, the data updating system includes an identifier storing unit for storing a device identifier for identifying the data update device , and the update-frequency data storing unit stores the corresponding update-frequency data every device identifier.

Accordingly, the update frequency can be managed every corresponding data update device on the basis of the update-frequency data provided every device identifier, and the frequency of the data update can be restricted every device identifier.

Furthermore, as a mode of the present invention, in the above data update system, the update-frequency data storing unit stores update-frequency data containing information indicating a update frequency at which the data update is carried out by the data updating device and information indicating an upper limit frequency at which the data update is allowed.

Accordingly, in the update permission judging unit, the presence or absence of the data update permission can be easily judged on the basis of the comparison between the update frequency and the upper limit frequency.

As a mode of the present invention, in the data updating system, the update permission judging unit and the update frequency updating unit are equipped in the portable storage medium.

Accordingly, the data update permission is judged in the portable storage medium, and when there is no data update permission, the update data can be prevented from being read from the portable storage medium to the data updating device, and the data updatable frequency can be freely restricted at a distribution source for distributing update data stored in the portable storage medium.

Furthermore, as a mode of the present invention, the data updating system includes a restoration result judging unit for judging pertinence of post-update data restored by the post-update data restoring unit, and a post-update data writing unit for writing the post-update data.

Accordingly, the pertinence of the post-update data is judged by the restoration result judging unit when the post-update data are restored, and only when the post-update data thus restored are normal, the post-update data can be written. Therefore, there can be reduced a risk that when a trouble occurs during the data restoration, inadequacy data are written and thus the data-updating device does not normally operate.

Furthermore, as a mode of the present invention, in the data updating system, the update data contains the differential data between the pre-update data and the post-update data.

Accordingly, the post-update data can be restored by using the differential data of the update data and the pre-update data, and thus the data amount of the update data can be reduced. Therefore, the storage capacity of the update data can be reduced in the portable storage medium, and the reading time of the update data by the data updating device can be shortened.

An external storage medium of the present invention is an external storage medium in a data updating system for updating data in an electronic device by using update data. The external storage medium being connectable to and separable from a data updating device for carrying out data update processing in the electronic device. The external storage medium includes: an update data storing unit for storing the update data; an update-frequency data storing unit for storing update-frequency data including information on a frequency at which data update can be performed by using the update data; an update permission judging unit for judging the presence or absence of data update permission on the basis of the update-frequency data when data are updated by the data updating device; and an update frequency updating unit for updating the update-frequency data when the update data is read by the data updating device on the basis of the data update permission.

Accordingly, when data update is carried out by the data updating device constructed in an electronic device or the like, the update-frequency data is updated by the update frequency updating unit, and when the frequency of the data update reaches a predetermined frequency, it is judged by the update permission judging unit that there is no update permission, and the update data is prohibited from being read from the external storage medium to the data updating device. Therefore, the frequency of the data update can be restricted at the distribution source of the external storage medium.

Furthermore, as a mode of the present invention, the external storage medium includes an update data deleting unit for deleting the update data when it is judged by the update permission judging unit that there is no data update permission.

Accordingly, when the data update permission is extinguished, the update data can be deleted in the external storage medium. Therefore, data can be prevented from being read by dishonest process, and the data update frequency can be more surely restricted.

Furthermore, as a mode of the present invention, in the external storage medium, the update-frequency data storing unit stores the update-frequency data every device identifier for identifying the data updating device.

Accordingly, in the external storage medium, the presence or absence of the data update permission can be judged on the basis of the update-frequency data provided every device identifier, and the data update frequency can be restricted every data updating device having the corresponding device identifier.

Furthermore, as a mode of the present invention, in the external storage medium, the update-frequency data storing unit stores update-frequency data containing information indicating the update frequency at which the data update is carried out by the data updating device and information indicating an upper limit frequency at which the data update is allowed.

Accordingly, the presence or absence of the data update permission can be easily judged on the basis of the comparison between the update frequency and the upper limit frequency in the update permission judging unit of the external storage medium.

Furthermore, the present invention provides a program for making a computer execute the function of each unit of any external storage medium described above.

A data updating device of the present invention which is a data updating device in a data updating system for carrying out data update in an electronic device by using update data, and it is constructed so as to be connectable to an external storage medium for storing the update data and equipped with an update data reading unit for reading the update data on the basis of data update permission in the external storage medium, and a post-update data restoring unit for restoring post-update data by using both the update data and pre-update data or only the update data.

Accordingly, the data update permission is achieved from the external storage medium to read the update data, and the post-update data can be restored, whereby the frequency of the data update can be restricted on the basis of the data update permission.

Furthermore, as a mode of the present invention, the data updating device includes an identifier storing unit for storing a device identifier for identifying the device itself.

Accordingly, the type, individuality, etc. of the data updating device can be identified on the basis of the device identifier. For example, by notifying a device identifier to the external storage device when data update is carried out, data update permission can be judged every device identifier in the external storage medium, and the data update frequency can be restricted.

Furthermore, as a mode of the present invention, the data updating device includes a restoration result judging unit for judging pertinence of post-update data restored by the post-update data restoring unit and a post-update data writing unit for writing the post-update data on the basis of the judgment of the restoration result.

Accordingly, when the post-update data are restored in the data updating device, the pertinence of the post-update data is judged by the restoration result judging unit, and the data can be written only when the post-update data are normal. Therefore, there can be reduced a risk that when a trouble occurs during data restoration, inadequacy data are written and the data-updating device does not normally operate.

Furthermore, the present invention provides a program for making a computer execute the function of each unit of any data updating device described above.

A data updating method according to the present invention is a data updating method for updating data in an electronic device by using update data stored in a portable storage medium, and includes: a step of judging the presence or absence of data update permission when data are updated by a data updating device for carrying out data update processing in the electronic device on the basis of update-frequency data containing information on a frequency at which the data update can be carried out by using the update data; a step of reading the update data on the basis of the data update permission; a step of updating the update-frequency data when the update data are read by the data updating device on the basis of the data update permission; and a step of restoring post-update data by using both of the update data and pre-update data or only the update data.

Accordingly, the presence or absence of the data update permission is judged on the basis of the update-frequency data, and when there is data update permission, the update data are read and the post-update data are restored. When the data update is carried out, the update-frequency data can be updated. When the data update frequency reaches a predetermined frequency, it is judged that there is no update permission, the update data can be prevented from being read from the portable storage medium, so that the data update frequency can be restricted.

Furthermore, the present invention provides a program for making a computer execute each step in the data updating method described above.

According to the present invention, when update data stored in the portable storage medium is distributed to update data, the data updatable frequency can be freely restricted at the distribution source of the update data.

### <Brief Description of the Drawings>

Fig. 1 is a block diagram showing the functional construction of a data updating system according to a first embodiment of the present invention;
Fig. 2 is a flowchart showing the operation procedure of data update in the data updating system according to the first embodiment;
Fig. 3 is a diagram showing an example of a data structure of update-frequency data according to the embodiment;
Fig. 4 is a flowchart showing the operation procedure of judging the presence or absence of update permission in an update permission judging portion of the embodiment;
Fig. 5 is a block diagram showing a construction that an update-frequency data setting device is connected to an external storage medium in this embodiment;
Fig. 6 is a block diagram showing a construction that an update data writing device is connected to an external storage medium in this embodiment;
Fig. 7 is a block diagram showing the construction of a modification of the first embodiment;
Fig. 8 is a block diagram showing the functional construction of a data updating system according to a second embodiment of the present invention;
Fig. 9 is a flowchart showing the operation procedure of data update in a data update system according to a second embodiment;
Fig. 10 is a block diagram showing the functional construction of a data updating system according to a third embodiment of the present invention;
Fig. 11 is a flowchart showing the operation procedure of data update in the data updating system according to the third embodiment;
Fig. 12 is a block diagram showing the functional construction of a data updating system according to a fourth embodiment of the present invention;
Fig. 13 is a flowchart showing the operation procedure of data update in the data updating system according to the fourth embodiment;
Fig. 14 is a block diagram showing the functional construction of a data updating system according to a fifth embodiment of the present invention;
Fig. 15 is a flowchart showing the operation procedure of data update in the data updating system according to the fifth embodiment;
Fig. 16 is a block diagram showing the construction of a modification of the fifth embodiment; and
Fig. 17 is a block diagram showing a construction of a conventional data updating system.

Reference numerals 101, 501, 701, 901, 1501 in the figures represent a data updating system, 102, 502, 702, 902, 1502 represents a terminal (data updating device), 103, 503, 703, 903, 1503 represents an external storage medium, 104, 504, 704, 904, 1504 represents an in-terminal data storing portion, 106, 506, 706, 906, 1506 represents a controller, 107, 507, 707, 907, 1507 represents a post-update data restoring portion, 108, 508, 708, 908, 1508 represents an in-terminal data reading/writing portion, 109, 509, 709, 909, 1509 represents an update data reading portion, 110, 510, 710, 910, 1510 represents an update permission judging portion, 111, 511, 711, 911, 1511 represents an update frequency updating portion, 112, 512, 712, 912, 1512 represents an update-frequency data storing portion, 113, 513, 713, 913, 1513 represents an update data storing portion, 131 represents an update frequency storing portion, 132 represents an upper limit frequency storing portion, 151 represents an update-frequency data setting device, 152 represents an upper limit frequency setting portion, 153 represents an update frequency setting portion, 154 represents an update-frequency data writing portion, 161 represents an update data writing device, 162 represents a data storing portion, 163 represents an update data generating portion, 164 represents an update data writing portion, 301 represents an update frequency, 302 represents an upper limit frequency, 514 represents an update data deleting portion, 714 represents a terminal identifying storing portion, 914 represents a restoration result judging portion, 1521 represents a present time and date storing portion, and 1522 represents an updatable term storing portion.

### <Best Modes for carrying out the Invention>

A data updating system according to an embodiment is applicable to an electronic device such as a portable terminal device such as a cellular phone device, a Personal Digital Assistant(PDA) or the like. In the following description will be made a case where a data updating device is constructed ion a terminal corresponding to an electronic device having data to be updated and a function of updating data in the device itself is provided.

### (First Embodiment)

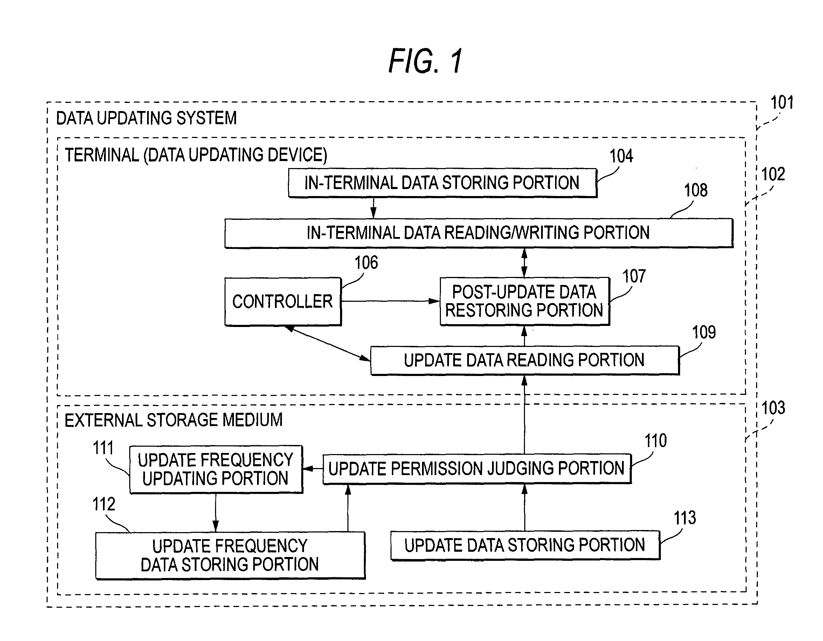

Fig. 1 is a block diagram showing the functional construction of a data updating system according to a first embodiment of the present invention. The data updating system 101 of the first embodiment includes a terminal 102 containing data to be updated and equipped a data updating device for carrying out update processing of data stored in the device itself by using update data, and an external storage medium 103 corresponding to an example of a portable storage medium in which update data for data update provided to the terminal 102 are stored. The external storage medium 103 includes a portable medium, and designed so as to be detachably connectable to and separable from the terminal (data updating device) 102.

The terminal 102 includes an in-terminal data storing portion 104 for storing pre-update data and post-update data, a controller 106 for controlling the overall terminal, a post-update data restoring portion (corresponding to an example of the post-update data restoring unit) 107 for restoring post-update data from both the pre-update data and the update data or only the update data, an in-terminal data reading/writing portion 108 for reading/writing data stored in the in-terminal data storing portion 104, and an update data reading portion (corresponding to an example of the update data reading unit) 109 for reading the update data from the external storage medium 103.

The external storage medium 103 includes an update permission judging portion (corresponding to an example of the update permission judging unit) 110 for judging the presence or absence of update permission from update-frequency data, an update frequency updating portion (corresponding to an example of the update frequency updating unit) 111 for updating the update-frequency data when data update is carried out by the terminal 102, an update-frequency data storing portion (corresponding to an example of the update-frequency data storing unit) 112 for storing the update-frequency data, and an update data storing portion 113 for storing update data. As the external storage medium 103 may be used various types of storage media such as an SD (trademark) memory card, an SD (trademark) I/O card, a multimedia card (MMC), a memory stick (trademark), a compact flash (trademark) (CF) card, a hard disc drive, an USB memory, etc.

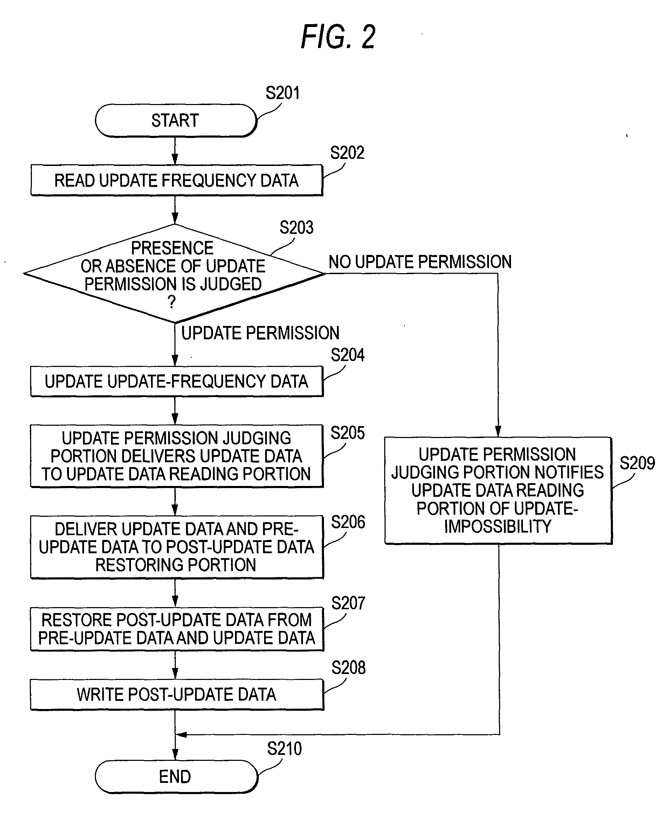

Next, the operation of the data updating system 101 according to the first embodiment will be described with reference to Figs. 2 to 4.

Fig. 2 is a flowchart showing the operation procedure when pre-update data stored in the in-terminal data storing portion 104 of the terminal 102 are updated by using update data stored in the update data storing portion 113 of the external storage medium 103.

When the controller 106 of the terminal (data updating device) 102 starts the data update processing (step S201), the update permission judging portion 110 in the external storage medium 103 reads update-frequency data from the update-frequency data storing portion 112 (step S202). Subsequently, the update permission judging portion 110 interprets the content of the update-frequency data and judges the presence or absence of update permission (step S203).

If it is judged in step S203 that there is no update permission, the update permission judging portion 110 notifies the update data reading portion 109 of the terminal 102 of the information that the update is impossible (step S209), and the controller 106 finishes the processing with carrying out no data update (step S210).

When it is judged in step S203 that there is update permission, the update frequency updating portion 111 updates the update-frequency data stored in the update-frequency data storing portion 112 (step S204). The update permission judging portion 110 reads out update data from the update data storing portion 113, and delivers the update data to the update data reading portion 109 (step S205).

Subsequently, the post-update data restoring portion 107 of the terminal 102 received the update data from the update data reading portion 109, and receives the pre-update data stored in the in-terminal data storing portion 104 from the in-terminal data reading/writing portion 108 (step S206). The post-update data restoring portion 107 restores the post-update data from the pre-update data and the update data(step S207). Subsequently, the post-update data are written into the in-terminal data storing portion 104 by the in-terminal data reading/writing portion 108(step S208), and the controller 106 finishes the data update processing (step S210).

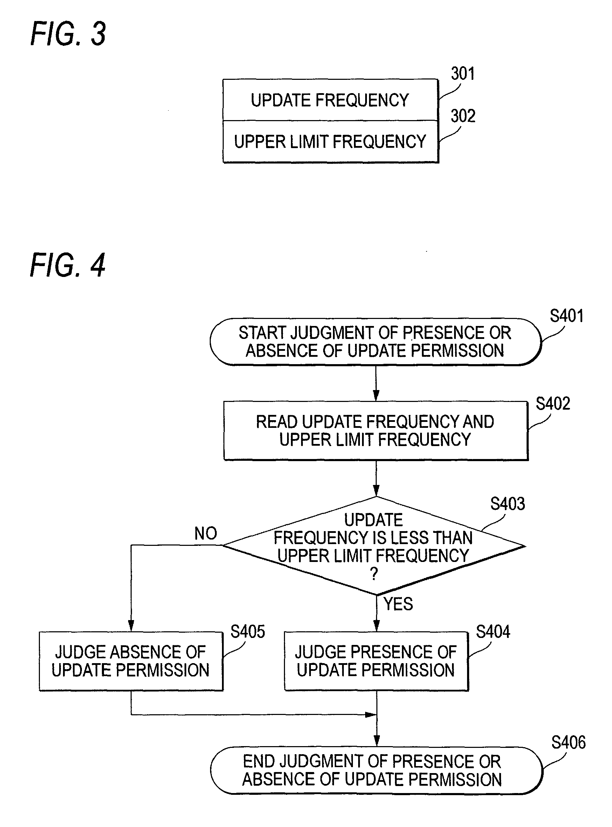

Fig. 3 is a diagram showing an example of the data structure of the update-frequency data. The update-frequency data are stored in the external storage medium 103 by the update-frequency data storing portion 112, and used for the update permission judgment. In this case, the update-frequency data has a data structure containing an update frequency 301 representing a frequency at which data update is carried out on the basis of update data stored in the update data storing portion 113, and an upper limit frequency 302 representing a frequency at which the execution of data update on the basis of the update data is allowed.

Fig. 4 is a flowchart representing the operation procedure of the judgment as to the presence or absence of update permission in the update permission judging portion 110. Fig. 4 shows the detailed procedure of the step of judging the presence or absence of the update permission.

When starting the judgment of the presence or absence of the update permission (step S401), the update permission judging portion 110 first read the update frequency 301 and the upper limit frequency 302 stored in the update-frequency data storing portion 112 (step S402), and compares the values of these frequencies (step S403).

If the comparison result of the step S403 indicates that the update frequency is less than the upper limit frequency, the update permission judging portion 110 judges that there is update permission (step S404), and this processing is finished (step S406). On the other hand, when the update frequency reaches the upper limit frequency or when it is above the upper limit frequency, the update permission judging portion 110 judges that there is no update permission (step S405), and this processing is finished (step S406).

As described above, according to the first embodiment, the external storage medium 1034 includes the update permission judging portion 110, the update frequency updating portion 111 and the update-frequency data storing portion 112. Furthermore, the frequency at which the data update is carried out by using the update data stored in the update data storing portion 113 and the upper limit frequency at which the data update is allowed are stored in the update-frequency data storing portion 112, and the update permission judging portion 110 judges whether the update frequency is less than the upper limit frequency. If the update frequency is less than the upper limit frequency, the update permission judging portion 110 judges that the data update is possible, reads out the update data from the update data storing portion 113 and delivers the update data to the update data reading portion 109 at the terminal 102 side, and the update frequency of the update-frequency data storing portion 112 is updated by the update frequency updating portion 111. Accordingly, for example by setting the upper limit frequency for update permission at the distribution source, the frequency at which a user can carry out data update can be arbitrarily restricted by using the update data stored in the update data storing portion 113.

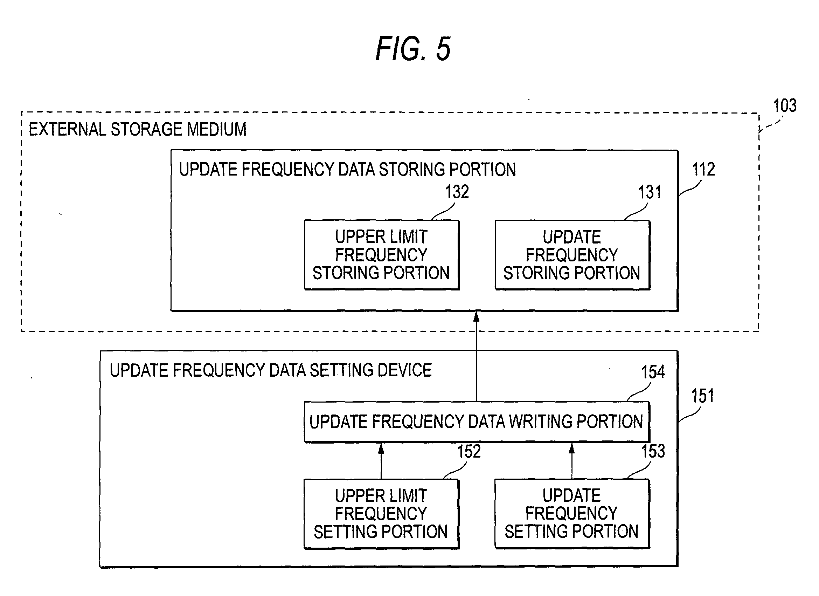

When the update-frequency data has the data structure shown in Fig. 3, an update-frequency data setting device as shown in Fig. 5 is used to set the update-frequency data. Fig. 5 is a block diagram showing a construction example that the update-frequency data setting device 151 is connected to the external storage medium 103.

The update-frequency data setting device 151 is a device for setting the update-frequency data in the external storage medium 103, and it includes an upper limit frequency setting portion 152 for setting the upper limit frequency 302, an update frequency setting portion 153 for setting the update frequency 301, and an update-frequency data writing portion 154 for writing the update-frequency data into the update-frequency data storing portion 112 of the external storage medium. In this case, the external storage medium 103 used for data update includes an update frequency storing portion 131 for storing the update frequency 301 and an upper limit frequency storing portion 132 for storing the upper limit frequency 302 in the update-frequency data storing portion 112.

In the update-frequency data setting device 151, the upper limit frequency 302 and the update frequency 301 are set on the basis of an operation instruction of the distributor of the update data by the upper limit frequency setting portion 152 and the update frequency setting portion 153 respectively, and the update-frequency data writing portion 154 writes corresponding data into the upper limit frequency storing portion 132 and the update frequency storing portion 131 of the external storage medium 103.

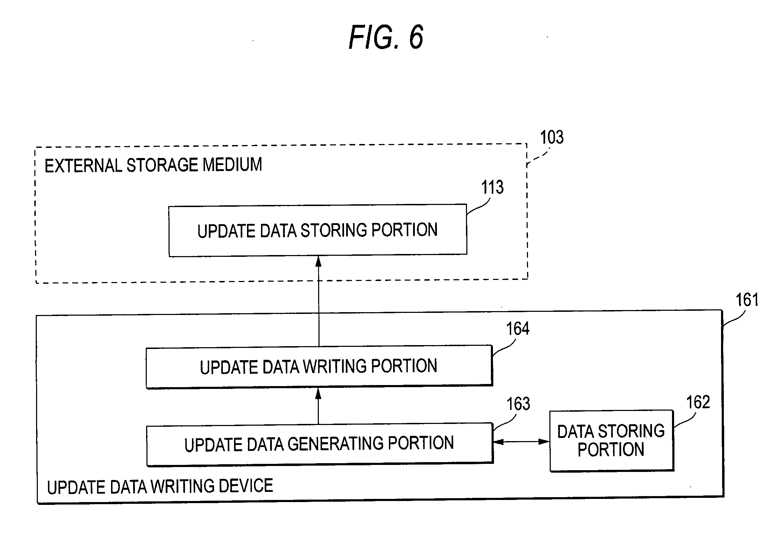

Furthermore, an update data wiring device as shown in Fig. 6 is used to store the update data into the external storage medium 103. Fig. 6 is a block diagram showing a construction example that the update data writing device 161 is connected to the external storage medium 103.

The update data writing device 161 includes a data storing portion 162 for storing base data to generate update data such as pre-update data, post-update data, etc., an update data generating portion 163 for generating update data, and an update data writing portion 164 for writing the update data into the update data storing portion 113 of the external storage medium 103. In this update data writing device 161, the pre-update data, the post-update data or the like are read out from the data storing portion 162 by the update data generating portion 163, the update data based on the differential data between the pre-update data and the post-update data or the like are generated, and the update data thus generated are written into the update data storing portion 113 of the external storage medium 103 by the update data writing portion 164.

The update-frequency data are stored in an area where data update cannot be easily performed. Accordingly, the update frequency can be more surely restricted. The update-frequency data storing portion 112 having the area in which the data update cannot be easily performed may be provided in the external storage medium 103 as described above, or may be provided in the terminal 102.

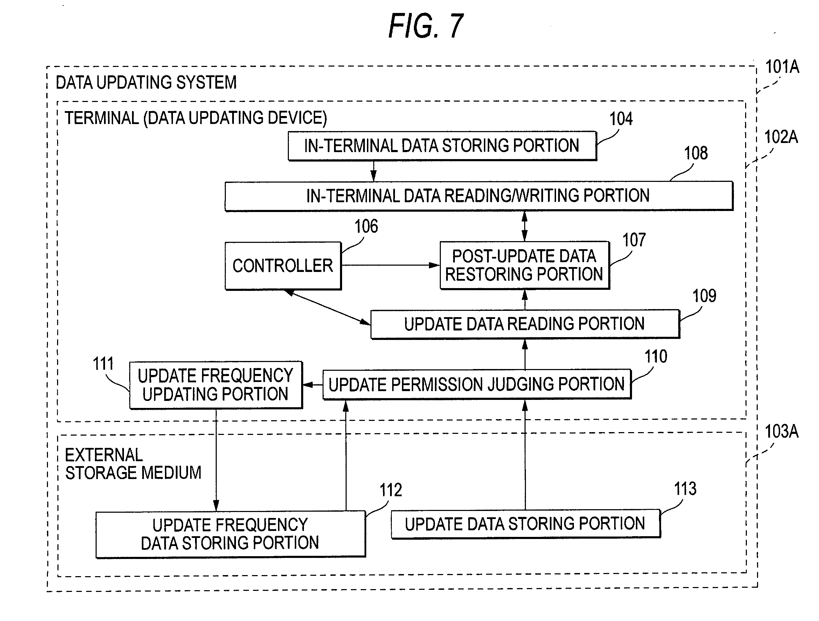

Furthermore, the first embodiment may be modified so that the update permission judging portion 110 and the update frequency updating portion 111 are provided at the terminal side. Fig. 7 is a block diagram showing the construction of the modification of the first embodiment. The data updating system 101A of this modification includes a terminal 102A and an external storage medium 103A. The terminal 102A is provided with the update permission judging portion 110 and the update frequency updating portion 111, and the external storage medium 103A includes only the update-frequency data storing portion 112 and the update data storing portion 113. The other construction is the same as the first embodiment shown in Fig. 1. Even when the update permission judging portion 110 and the update frequency updating portion 111 are provided at the terminal side, the same function as described above can be implemented.

According to the first embodiment described above, the portable external storage media 103 are distributed while the update data are stored therein, and when the data update is carried out on the operating program, etc. in the terminal 102, the data updatable frequency can be freely restricted by setting the update-frequency data in the external storage media 103 at the distribution source of the update data. Accordingly, in such a case that the update data itself or an external storage medium 103 having the update data stored therein is delivered to an unintentional third party, an inadequacy user or the like can be prevented from carrying out data update at a frequency higher than a frequency allowed by the distribution source of the update data.

### (Second Embodiment)

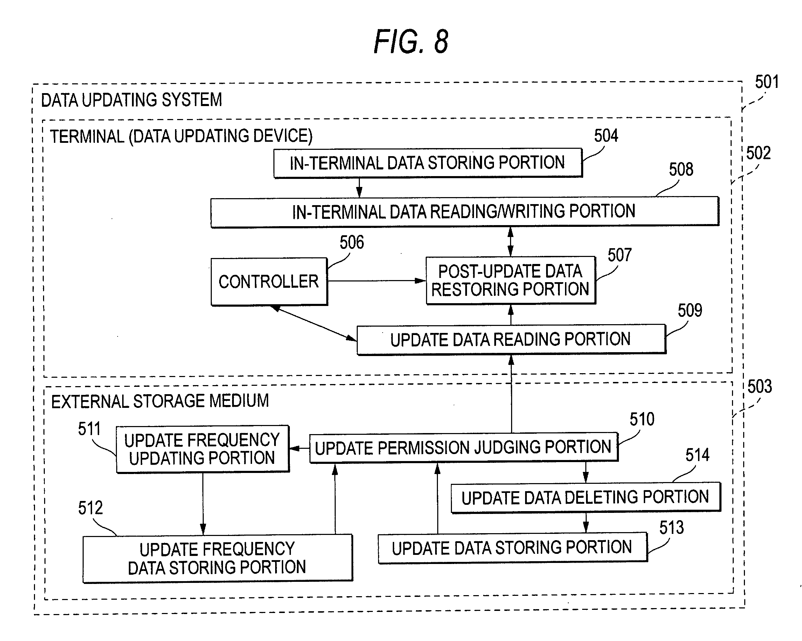

Fig. 8 is a block diagram showing the functional construction of a data updating system according to a second embodiment of the present invention. As in the case of the first embodiment, a data updating system 501 according to the second embodiment includes a terminal 502 having update target data stored therein and contains a data updating device for carrying out update processing of data stored in the device itself by using update data, and an external storage medium 503 for storing update data for updating the data of the terminal 502.

The terminal 502 includes an in-terminal data storing portion 504 for storing pre-update data and post-update data, a controller 506 for controlling the overall terminal, a post-update data restoring portion 507 for restoring the post-update data from both the pre-update data and the update data or only the update data, an in-terminal data reading/writing portion 508 for reading/writing data stored in the in-terminal data storing portion 504, and an update data reading portion 509 for reading update data from the external storage medium 503.

Furthermore, the external storage medium 503 includes an update permission judging portion 510 for judging the presence or absence of update permission from update-frequency data, an update frequency updating portion 511 for updating the update-frequency data when data update is carried out by the terminal 502, an update-frequency data storing portion 512 for storing the update-frequency data, an update data storing portion 513 for storing update data, and an update data deleting portion (corresponding to an example of the update data deleting unit) 514 for deleting update data stored in the update data storing portion 513 when it is notified from the update permission judging portion 510 that the update permission is extinguished.

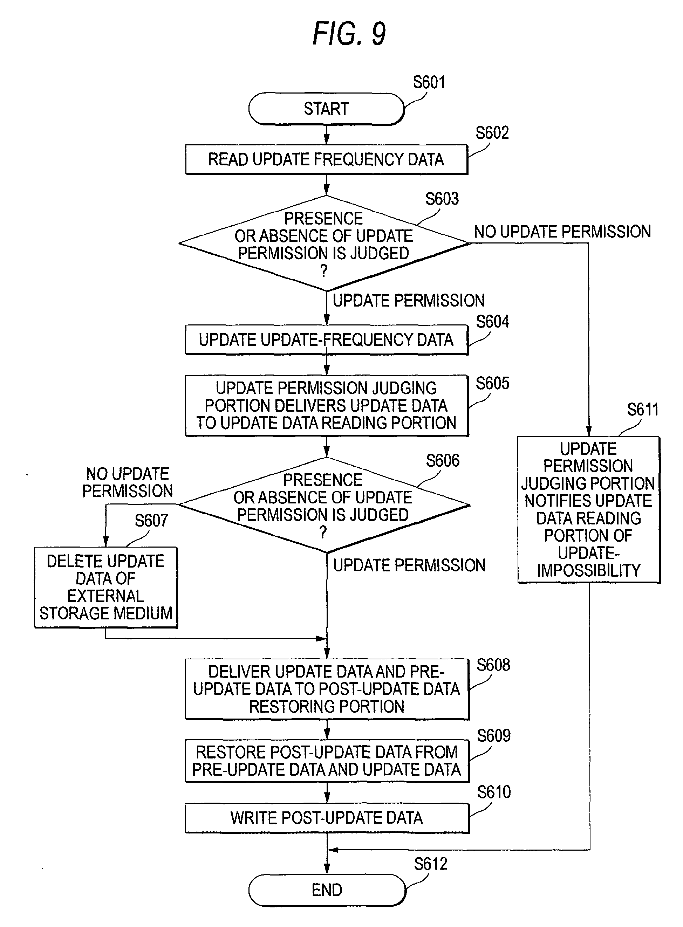

Fig. 9 is a flowchart showing the operating operation when the update data stored in the in-terminal data storing portion 504 of the terminal 502 are updated by using the update data stored in the update data storing portion 513 of the external storage medium 503.

When the controller 506 of the terminal (data updating device) 502 starts data update processing (step S601), the update permission judging portion 510 of the external storage medium 503 reads in the update-frequency data from the update-frequency data storing portion 512 (step S602). Subsequently, the update permission judging portion 510 interprets the content of the update-frequency data and judges the presence or absence of the update permission (step S603).

If it is judged in step S603 that there is no update permission, the update permission judging portion 510 notifies the update data reading portion 509 of the terminal 502 that data update is impossible (step S611), and the controller 506 finishes the processing with carrying out no data update (step S612).

If it is judged in step S603 that there is update permission, the update frequency updating portion 511 updates the update-frequency data stored in the update-frequency data storing portion 512 (step S604). The update permission judging portion 510 reads out the update data from the update data storing portion 513, and delivers the data to the update data reading portion 509 (step S605).

Next, the update permission judging portion 510 interprets the content of the update-frequency data updated in step S604, and judges the presence or absence of the update permission (step S606). If it is judged in step S606 that there is no update permission, the update data deleting portion 514 deletes the update data stored in the update data storing portion 513 (step S607). On the other hand, if it is judged in step S606 that there is update permission, the update data are not deleted.

Thereafter, the post-update data restoring portion 507 of the terminal 502 receives the update data from the update data reading portion 509, and also receives the pre-update data stored in the in-terminal data storing portion 504 from the in-terminal data reading/writing portion 508 (step S608). The post-update data restoring portion 507 restores the post-update data from the pre-update data and the update data (step S609). Subsequently, the post-update data are written into the in-terminal data storing portion 504 by the in-terminal data reading/writing portion 508 (step S610), and the controller 506 finishes the data update processing (step S612).

In the second embodiment, the data structure of the update-frequency data being used is assumed to be the same as the first embodiment shown in Fig. 3. Furthermore, in the operation of the second embodiment, the judging operation of the presence or absence of the update permission in the steps 603 and S606 is the same as the first embodiment described with reference to Fig. 4.

As described above, in the second embodiment, the external storage medium 503, is provided with the update data deleting portion 514, and the update data are deleted when the update frequency reaches a predetermined frequency, whereby the update data can be prevented from being read in by dishonest process, and the data update frequency can be more surely restricted. Furthermore, by deleting the update data, the usable area of the storage medium can be increased, and thus the amount of storable data can be increased when a user uses this storage medium for another data storage.

### (Third Embodiment)

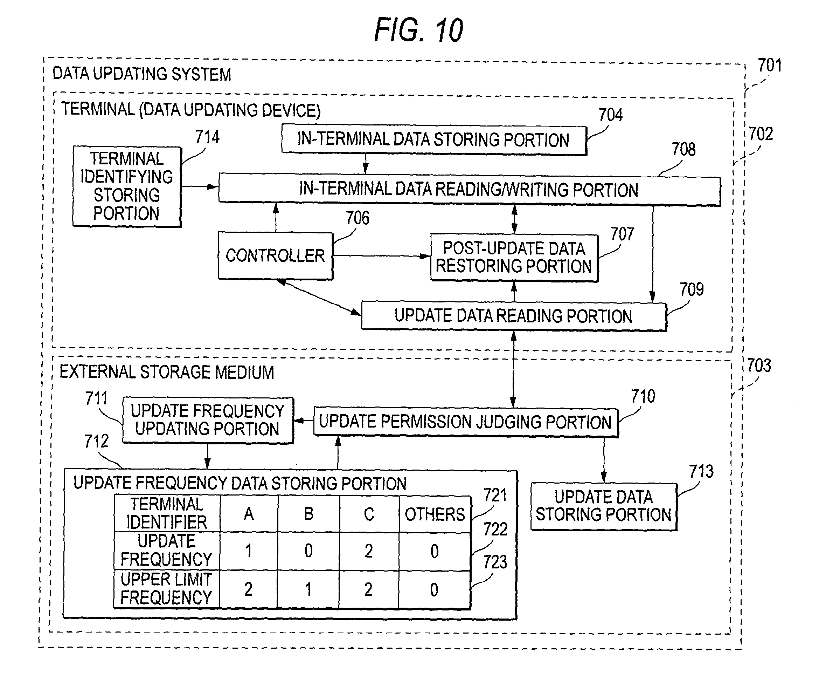

Fig. 10 is a block diagram showing the functional construction of a data updating system according to a third embodiment of the present invention. A data updating system 701 of the third embodiment includes a terminal 702 which has update target data stored therein and contains a data updating device for carrying out data update processing of data stored in the device itself by using update data, and an external storage medium 703 for storing update data for updating the data of the terminal 702 as in the case of the first embodiment.

The terminal 702 includes an in-terminal data storing portion 704 for storing pre-update data and post-update data of the terminal 702, a controller 706 for controlling the overall terminal 702, a post-update data restoring portion 707 for restoring the post-update data from both the pre-update data and the update data or only the update data, an in-terminal data reading/writing portion 708 for reading/writing data stored in the in-terminal data storing portion 704 and a terminal identifier storing portion 714, an update data reading portion 709 for reading update data from the external storage medium 703, and a terminal identifier storing portion (corresponding to an example of the identifier storing unit) 714 for storing a terminal identifier set every terminal.

Furthermore, the external storage medium 703 includes an update permission judging portion 710 for judging the presence or absence of update permission from update-frequency data, an update frequency updating portion 711 for updating the update-frequency data when data update is carried out by the terminal 702, an update-frequency data storing portion 712 for storing the update-frequency data, and an update data storing portion 713 for storing the update data.

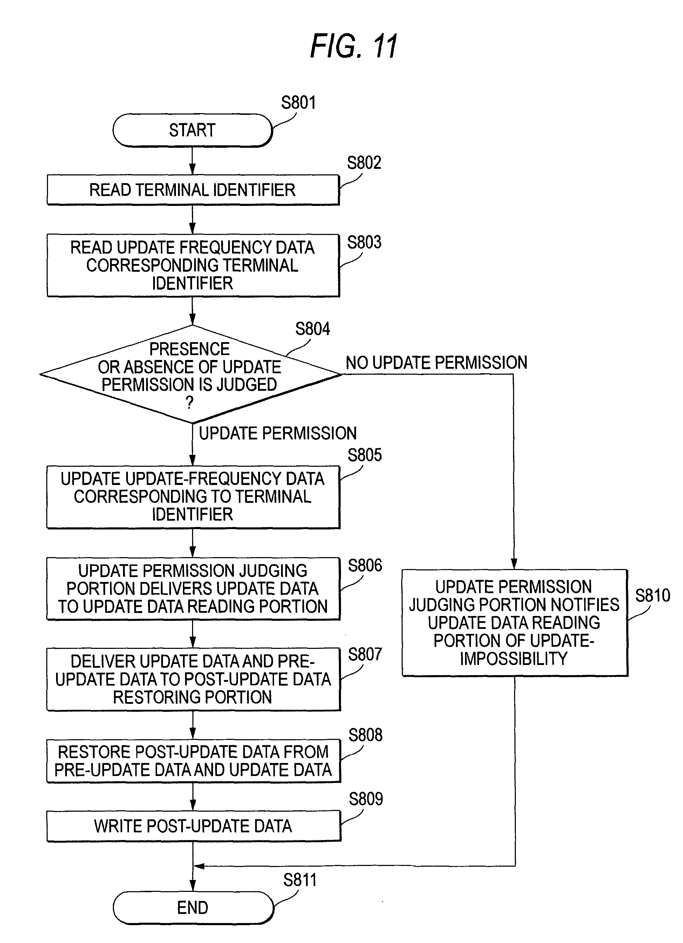

The update-frequency data storing portion 712 stores the update-frequency data every terminal identifier. That is, it is assumed that the update-frequency data has a data structure containing a terminal identifier 721, an update frequency 722 representing a data-update execution frequency on the basis of the update data stored in the update data storing portion 713 in the terminal having the terminal identifier, and an upper limit frequency 723 representing a data-update-execution allowed frequency on the basis of the update data in the terminal having the terminal identifier. Next, the operation of the data updating system 701 of the third embodiment will be described with reference to Fig. 11.

Fig. 11 is a flowchart showing the operation procedure when the pre-update data stored in the in-terminal data storing portion 704 of the terminal 702 are updated by using the update data stored in the update data storing portion 713 of the external storage medium 703.

When the controller 706 of the terminal (data updating device) 702 starts the data update processing (step S801), the in-terminal data reading/writing portion 708 reads a terminal identifier stored in the terminal identifier storing portion 714 and delivers the terminal identifier through the update data reading portion 709 to the update permission judging portion 710 in the external storage medium 703 (step S802). Subsequently, the update permission judging portion 710 reads the update-frequency data corresponding to the terminal identifier from the update-frequency data storing portion 712 (step S803). The update permission judging portion 710 interprets the content of the update-frequency data to judge the presence and absence of the update permission (step S804).

If it is judged in step S804 that there is no update permission, the update permission judging portion 710 notifies the update data reading portion 709 of the terminal 702 of the information that the update is impossible, and the controller 706 finishes the processing with carrying out no data update (step S811).

On the other hand, if it is judged in step S804 that there is update permission, the update frequency updating portion 711 updates the portion corresponding to the terminal identifier concerned out of the update-frequency data stored in the update-frequency data storing portion 712(step S805). The update permission judging portion 710 reads out the update data from the update data storing portion 713, and delivers the data to the update data reading portion 709 (step S806).

Subsequently, the post-update data restoring portion 707 of the terminal 702 receives the update data from the update data reading portion 709, and also receives the pre-update data stored in the in-terminal data storing portion 704 from the in-terminal data reading/writing portion 708 (step S807). Then, the post-update data restoring portion 707 restores the post-update data from the pre-update data and the update data (step S808). Subsequently, the post-update data are written into the in-terminal data storing portion 704 by the in-terminal data reading/writing portion 708 (step S809), and the controller 706 finishes the data update processing (step S811).

In the operation of the third embodiment, the judging operation of the presence or absence of the update permission in step S804 is the same as the first embodiment described with reference to Fig. 4.

As described above, according to the third embodiment, the terminal identifier storing portion 714 is provided in the terminal 702, and the external storage medium 703 is designed to have the data structure that the update-frequency data are stored every terminal identifier, so that the data updatable frequency can be minutely restricted every terminal identifier.

### (Fourth Embodiment)

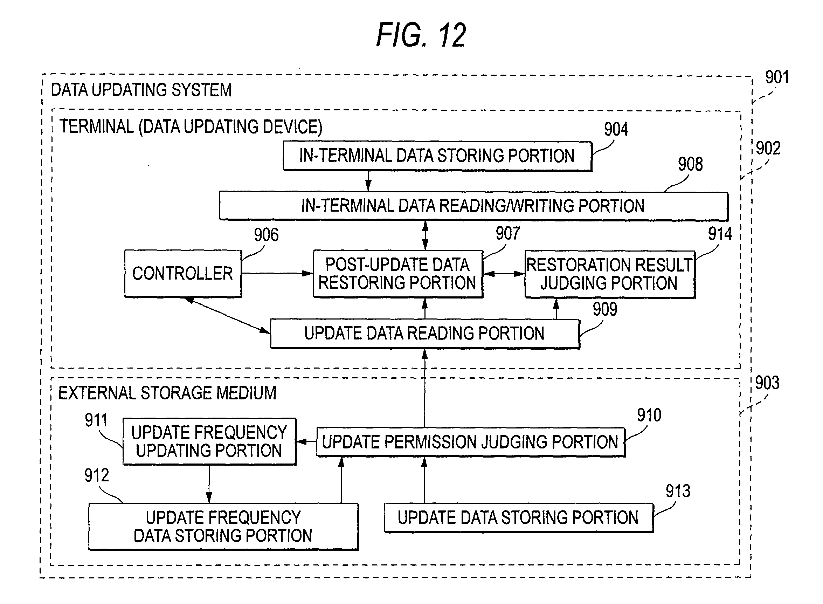

Fig. 12 is a block diagram showing the functional construction of a data updating system according to a fourth embodiment of the present invention. The data updating system 901 according to the fourth embodiment includes a terminal 902 which has update target data stored therein and contains a data updating device for carrying out update processing of data stored in the device itself by using update data, and an external storage medium 903 for storing update data for updating the data of the terminal 902.

The terminal 902 includes an in-terminal data storing portion 904 for storing pre-update data and post-update data of the terminal 902, a controller 906 for controlling the overall terminal 902, a post-update data restoring portion 907 for restoring the post-update data from both the pre-update data and update data or only the update data, an in-terminal data reading/writing portion 908 for reading/writing data stored in the in-terminal data storing portion 904,an update data reading portion 909 for reading update data from the external storage medium 903, and a restoration result judging portion (corresponding to an example of the restoration result judging unit) 914 for judging whether the post-update data restored by the post-update data restoring portion 907 is correctly restored or not. The in-terminal data reading/writing portion 908 has the function of the post-update data writing unit.

The external storage medium 903 includes an update permission judging portion 910 for judging the presence or absence of update permission from update-frequency data, an update frequency updating portion 911 for updating the update-frequency data when data update is carried out by the terminal 902, an update-frequency data storing portion 912 for storing the update-frequency data, and an update data restoring portion 913 for storing the update data. The update data stored in the external storage medium 903 includes the differential data between the pre-update data and the post-update data and judging data for judging the restoration result of the post-update data.

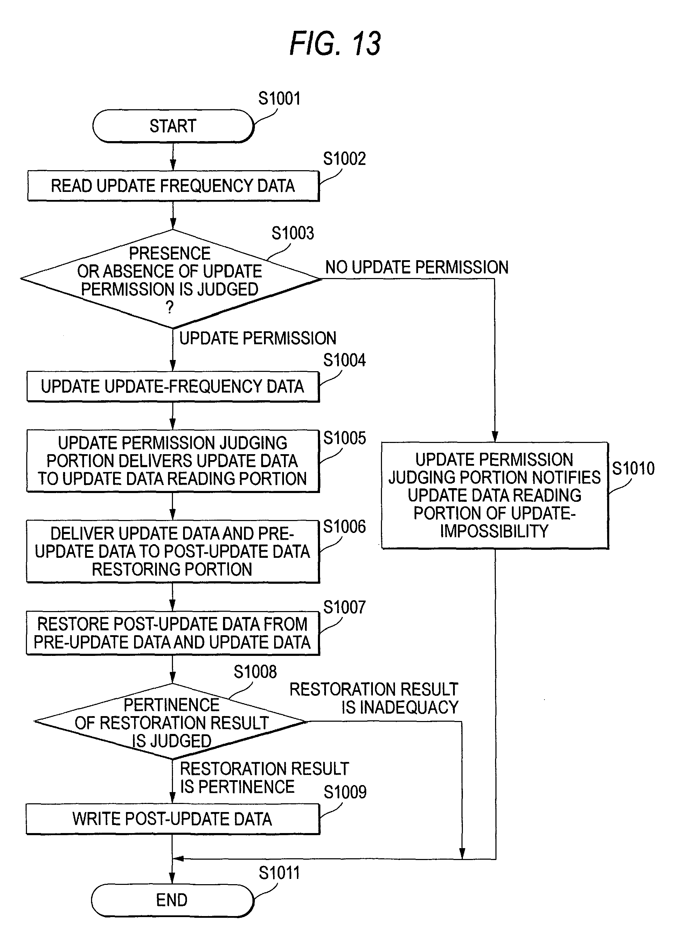

Next, the operation of the data update system 901 of the fourth embodiment will be described with reference to Fig. 13.

Fig. 13 is a flowchart showing the operation procedure when the pre-update data stored in the in-terminal data storing portion 904 of the terminal 902 are updated by using the update data stored in the update data storing portion 913 of the external storage medium 903.

When the controller 906 of the terminal (data updating device) 902 starts data update processing (step S1001), the update permission judging portion 910 of the external storage medium 903 first reads the update-frequency data from the update-frequency data storing portion 912 (step S1002). Subsequently, the update permission judging portion 910 interprets the content of the update-frequency data, and judges the presence or absence of the update permission (step S1003).

If it is judged in step S1003 that there is no update permission, the update permission judging portion 91 notifies the update data reading portion 909 of the terminal of the information that the update is impossible (step S1010), and the controller 906 finishes the processing with carrying out no data update (step S1011).

On the other hand, if it is judged in step S1003 that there is update permission, the update frequency updating portion 911 updates the update-frequency data stored in the update-frequency data storing portion 912 (step S1004). Then, the update permission judging portion 910 reads out the update data from the update data storing portion 913, and delivers the data to the update data reading portion 909 (step S1005).

Subsequently, the post-update data restoring portion 907 of the terminal 902 receives the update data from the update data reading portion 909, and also receives the pre-update data stored in the in-terminal data storing portion 904 from the in-terminal data reading/writing portion 908 (step S1006). Then, the post-update data restoring portion 907 restores the post-update data from the pre-update data and the update data (step S1007). Thereafter, the restoration result judging portion 914 judges pertinence of the post-update data thus restored on the basis of the judging data and the post-update data thus restored (step S 1008).

If it is judged in step S1008 that the restoration result is right, the in-terminal data reading/writing portion 908 writes the post-update data into the in-terminal data storing portion 904 (step S1009), and the controller 906 finishes the data update processing (step S1011). On the other hand, when a trouble or the like occurs in the data restoration processing and thus it is judged in step S1008 that the restoration result is not right, the controller 906 finishes the processing with carrying out no data update (step S1011).

In the fourth embodiment, the data structure of the update-frequency data being used is the same as the first embodiment shown in Fig. 3. In the operation of the fourth embodiment, the judging operation of the presence or absence of the update permission in step S1003 is the same as the first embodiment described with reference to Fig. 4.

The judging operation of the restoration result in step S1008 and the structure of the judging data to be referred in this step can be implemented by a generally and broadly known error detecting method (check sum, CRC, parity check or the like).

As described above, in the fourth embodiment, the restoration result judging portion 914 is provided in the terminal 902, and the post-update data restored are written into the in-terminal data storing portion 904 after the pertinence of the restored post-update data is judged by using the judging data of the restoration result provided to the update data, so that inadequacy data can be prevented from being written when the restoration of the post-update data fails.

### (Fifth Embodiment)

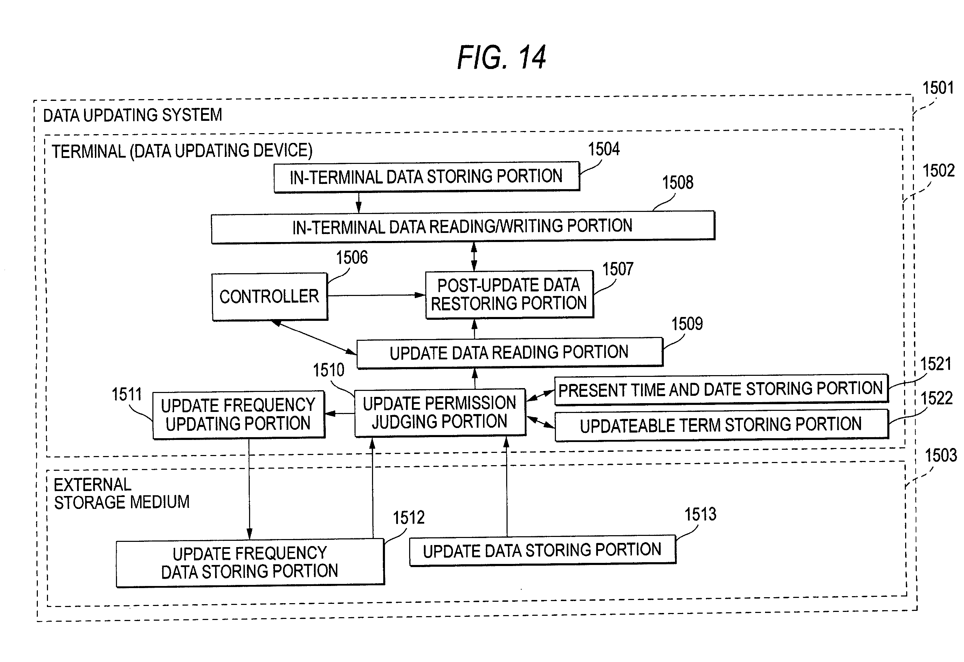

Fig. 14 is a block diagram showing the functional construction of a data updating system according to a fifth embodiment of the present invention. A data updating system 1501 of the fifth embodiment includes a terminal 1502 which has update target data stored therein and contains a data updating device for carrying out update processing of data stored in the device itself by using update data, and an external storage medium 1503 for storing update data to update the data of the terminal 1502.

The terminal 1502 includes an in-terminal data storing portion 1504 for storing pre-update data and post-update data, a controller 1506 for controlling the overall terminal, a post-update data restoring portion 1507 for restoring post-update data from both the pre-update data and update data or only the update data, an in-terminal data reading/writing portion 1508 for reading/writing data stored in the in-terminal data storing portion 1504, an update data reading portion 1509 for reading the update data from the external storage medium 1503, an update permission judging portion 1510 for judging the presence or absence of update permission from update-frequency data, an update frequency updating portion 1511 for updating the update-frequency data when data update is carried out by the terminal 1502, a present time and date storing portion 1521 for storing the present time and date, and an updatable term storing portion 1522 for storing an updatable term.

The external storage medium 1503 includes an update-frequency data storing portion 1512 for storing update-frequency data and an update data storing portion 1513 for storing update data.

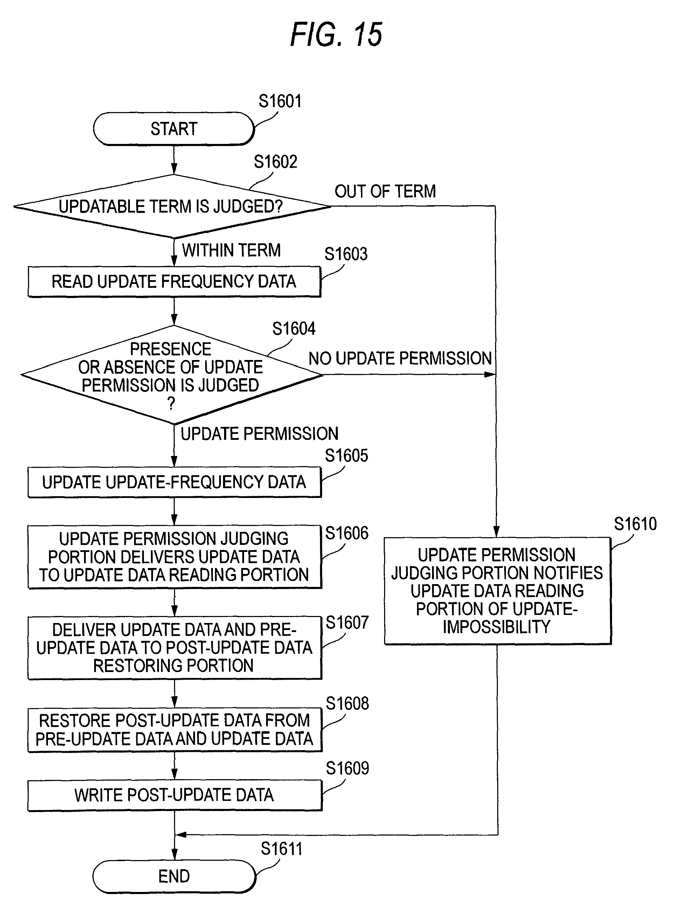

Next, the operation of the data update system 1501 according to the fifth embodiment will be described with reference to Fig. 15.

Fig. 15 is a flowchart showing the operation procedure when the pre-update data stored in the in-terminal data storing portion 1504 of the terminal 1502 are updated by using the update data stored in the update data storing portion 1513 of the external storage medium 1503.

When the controller 1506 of the terminal (data updating device) 1502 starts data update processing (step S1601), the update permission judging portion 1510 of the terminal 1502 judges on the basis of the updatable term read out from the updatable term storing portion 1522 and the present time and date read out from the present time and date storing portion 1521 whether the present time and date is within the updatable term (step S1602). If it is judged in step S1602 that the present time and date is out of the updatable term, the update permission judging portion 1510 notifies the update data reading portion 1509 of the terminal 1502 of the information that the update is impossible (step S1610), and the controller 1506 finishes the processing with carrying out no update data (step S1611).

On the other hand, if it is judged that it is within the updatable term, the update permission judging portion 1510 reads the update-frequency data from the update-frequency data storing portion 1512 of the external storage medium 1503 (step S1603). Subsequently, the update permission judging portion 1510 interprets the content of the update-frequency data to judge the presence or absence of the update permission (step S1604).

If it is judged in step S1604 that there is no update permission, the processing goes to step S1610 to notify the update data reading portion 1509 of the terminal 1502 of the information that the update is impossible, and the controller 1506 finishes the processing with carrying out no data update (step S1611) as in the case of the case where the present time and date is out of the update term.

On the other hand, if it is judged in step S1604 that there is update permission, the update frequency updating portion 1511 updates the update-frequency data stored in the update-frequency data storing portion 1512 (step S1605). The update permission judging portion 1510 reads out the update data from the update data storing portion 1513, and delivers the data to the update data reading portion 1509 (step S1606).

Subsequently, the post-update data restoring portion 1507 of the terminal 1502 receives the update data from the update data reading portion 1509, and also receives the pre-update data stored in the in-terminal data storing portion 1504 from the in-terminal data reading/writing portion 1508 (step S1607). The post-update data restoring portion 1507 restores the post-update data from the pre-update data and the update data (step S1608). Subsequently, the post-update data is written into the in-terminal data storage portion 1504 by the in-terminal data reading/writing portion 1508 (step S1609), and the controller 1506 finishes the data update processing (step S1611).

According to the fifth embodiment, the updatable term can be set, and it is impossible to carry out the update beyond the updatable term stored in the updatable term storing portion 1522. Furthermore, in order to prevent inadequacy update from being carried out beyond the updatable term, when the present time and date is changed, the updatable term of the updatable term storing portion 1522 is also changed interlockingly with the change of the present data and hour in the present time and date storing portion 1521. For example, in order to prevent such an inadequacy operation that "when the updatable term is terminated at 15 o'clock, but the present time and date is 16 o'clock, the clock is pushed back by two hours to enable the update for one more hour", there is carried out such a time changing operation that if the present time and date is pushed back by two hours, the updatable term is also pushed back by two hours.

By setting the updatable term as described above, the update term can be restricted so that the update is possible for only a predetermined term. Furthermore, the updatable term is changed interlockingly with the change of the present date, whereby inadequacy update due to the change of the present time and date can be prevented. As an example of keeping the updatable term at the terminal side, it may be applied to a case that such a setting that software can be updated with no charge for a fixed term in accordance with a contract or the like is stored in the device.

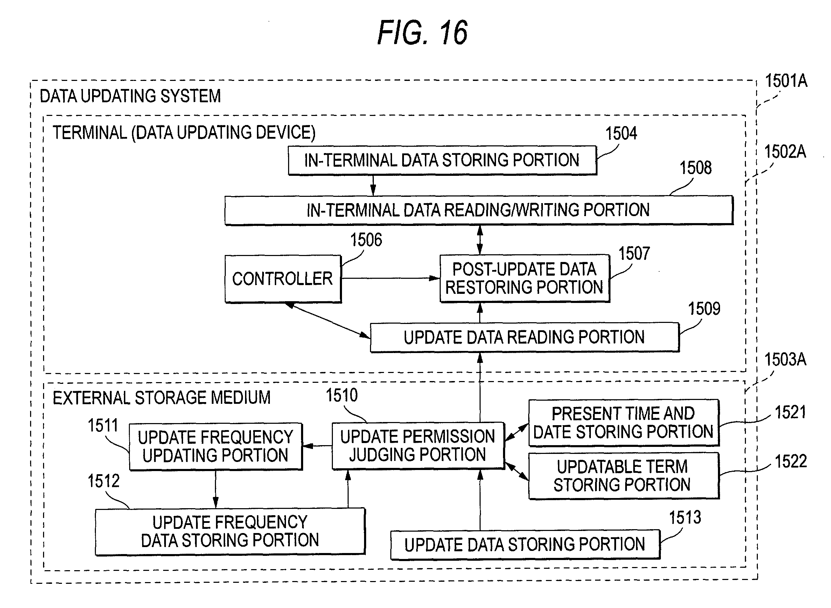

As a modification of the fifth embodiment, the update permission judging portion 1510, the update frequency updating portion 1511, the present time and date storing portion 1521 and the updatable term storing portion 1522 may be provided at the external storage medium side. Fig. 16 is a block diagram showing the construction of the modification of the fifth embodiment. The data update system 1501A of this modification is constructed by have a terminal 1502A and an external storage medium 1503A, and the external storage medium 1503A includes an update permission judging portion 1510, an update frequency updating portion 1511, a present time and date storing portion 1521 and an updatable term storing portion 1522. The other construction is the same as the fifth embodiment shown in Fig. 14. Even when the update permission judging portion 1510, the update frequency updating portion 1511, the present time and date storing portion 1521 and the updatable term storing portion 1522 are provided at the external storage medium side as described above, the same function as described above can be implemented. As an example of holding the updatable term at the external storage medium side, it may be applied to such a case that when update data are purchased in such a style that "a right of enabling use of the update data for one month is purchased", a one-month term is stored in a medium together with the update data.

The present invention is not limited to the above embodiments, and various modifications may be made without departing from the subject matter of the present invention.

In the first, second and fourth embodiments, the structure of the update-frequency data was described by using the example as shown in Fig. 3. However, another data structure may be adopted insofar as it can be known by the data structure whether the frequency at which the update has been hitherto carried out reaches the upper limit frequency. For example, the data structure is designed so as to hold only an update permitted frequency, and this permitted frequency is reduced every time data update is carried out. When the frequency reaches zero, the subsequent update is not permitted.

In the third embodiment, the structure of the update-frequency data was described on the assumption that it contains the terminal identifier 721, the update frequency 722 and the upper limit frequency 723 as shown in Fig. 10. However, another data structure may be used insofar as it can be known every terminal identifier by the data structure that the frequency reaches the upper limit frequency. Furthermore, the terminal identifier may be allocated so as to uniquely specify each terminal, or the same terminal identifier may be allocated to plural terminals.

Furthermore, in the second embodiment, the operation when the data update is carried out was described with reference to the flowchart of Fig. 9, however, the following modification may be considered. For example, the step S606 (the judgment as to the presence or absence of update permission) and the step S607 (the deletion of the update data) in Fig.9 are not carried out, and when no update permission is judged in the judgment of the presence or absence of the update permission of the step S603, the update data may be deleted.

Still furthermore, in the fourth embodiment, the operation when the data update is carried out was described with reference to the flowchart of Fig. 13. As a modification, for example, when it is judged that the restoration result is inadequacy in the judgment of the restoration result of the step S1008, the data restoration may be re-tried without finishing the processing.

Furthermore, in the first to fourth embodiments, the post-update data are restored from the update data and the pre-update data. However, a post-update data restoring method of restoring the post-update data by using only the update data can be used. The update data may be post-update data itself.

As described above, according to the above embodiments, the update-frequency data as well as the update data are provided to the external storage media distributed for data update, and the frequency at which the data update is carried out is judged by the update permission judging portion while the update-frequency data is updated by the update frequency updating portion. When the update frequency reaches a predetermined frequency, it is judged that there is no update permission. When there is no update permission, the update data are not prevented from being read by the post-update data restoring portion. Accordingly, the data update frequency can be restricted at the distribution source of the update data.

Furthermore, by deleting the update data after the data update is carried out at a predetermined permitted frequency, the update data can be prevented from being read by dishonest process. Accordingly, in addition to the restriction of the data update frequency, the function of managing the data update can be enforced.

Still furthermore, by providing the terminal identifier and judging the data update frequency every terminal identifier, the data update frequency can be restricted and managed every terminal or every user. Accordingly, even when the data update frequency is within a data updatable frequency, any person other than normal users can be prevented from carrying out the data update.

Still furthermore, the pertinence of the restored post-update is judged, and only when the restoration result is right, the post-update data are written. Therefore, there can be prevented such a disadvantage that when a trouble or the like occurs in the data restoring process and thus post-update data are not correctly restored, incorrect data are written and thus the terminal does not operate normally.

The present invention has been described in detail by referring to the specific embodiments, however, it is obvious from persons skilled in the art that various changes and modifications may be made without departing from the sprit and subject matter of the present invention.

This application is based on Japanese Patent Application (Japanese Patent Application No. 2003-319446) filed on September 11, 2003, and the contents thereof are taken in this application as a reference.

### <Industrial Applicability>

The present invention has an effect that a data update frequency can be freely restricted at a distribution source of update data when update data stored in portable storage media are distributed for data update, and useful to a data updating system, a data updating device, an external storage device, etc. for updating data such as programs, etc. in electronic devices.

## Claims

1. A data updating system for updating data in an electronic device by using update data stored in a portable storage medium, the data updating system, comprising:
an update-frequency data storing unit that stores update-frequency data including information on a frequency at which data update can be performed by using the update data;
an update permission judging unit that judges the presence or absence of data update permission on the basis of the update-frequency data when data is updated by a data updating device for carrying out data update processing in the electronic device;
an update data reading unit that reads the update data on the basis of the data update permission;
an update frequency updating unit that updates the update-frequency data when the update data is read by the data updating device on the basis of the data update permission; and
a post-update data restoring unit that restores post-update data by using both the update data and the pre-update data or by using only the update data.

2. The data updating system according to claim 1, further comprising an update data deleting unit that deletes the update data when the update permission judging unit judges that there is no data update permission.

3. The data updating system according to claim 1, further comprising an identifier storing unit that stores a device identifier for identifying the data update device,
wherein the update-frequency data storing unit stores the corresponding update-frequency data every device identifier.

4. The data update system according to claim 1 or 3, wherein the update-frequency data storing unit stores update-frequency data including information indicating an update frequency at which the data update is carried out by the data updating device and information indicating an upper limit frequency at which the data update is allowed.

5. The data updating system according to any one of claims 1 to 4, wherein the update permission judging unit and the update frequency updating unit are provided in the portable storage medium.

6. The data updating system according to any one of claims 1 to 5, further comprising:
a restoration result judging unit that judges pertinence of post-update data restored by the post-update data restoring unit; and
a post-update data writing unit that writes the post-update data.

7. The data updating system according to any one of claims 1 to 6, wherein the update data includes differential data between the pre-update data and the post-update data.

8. An external storage medium for a data updating system for updating data in an electronic device by using update data, and the external storage medium being connectable to and separable from a data updating device for carrying out data update processing in the electronic device, the external storage medium, comprising:
an update data storing unit that stores the update data;
an update-frequency data storing unit that stores update-frequency data including information on a frequency at which data update can be performed by using the update data;
an update permission judging unit that judges the presence or absence of data update permission on the basis of the update-frequency data when data is updated by the data updating device; and
an update frequency updating unit that updates the update-frequency data when the update data is read by the data updating device on the basis of the data update permission.

9. The external storage medium for the data updating system according to claim 8, further comprising an update data deleting unit that deletes the update data when the update permission judging unit judges that there is no data update permission.

10. The external storage medium for the data updating system according to claim 8, wherein the update-frequency data storing unit stores the update-frequency data every device identifier for identifying the data updating device.

11. The external storage medium for the data updating system according to claim 8 or 10, wherein the update-frequency data storing unit stores update-frequency data including information indicating the update frequency at which the data update is carried out by the data updating device and information indicating an upper limit frequency at which the data update is allowed.

12. A program for making a computer execute the function of each unit of the external storage medium according to any one of claims 8 to 11.

13. A data updating device in a data updating system for carrying out data update in an electronic device by using update data, and the data updating device being configured to be connectable to an external storage medium for storing the update data, the data updating device comprising:
an update data reading unit that reads the update data on the basis of data update permission in the external storage medium; and
a post-update data restoring unit that restores post-update data by using both the update data and pre-update data or only the update data.

14. The data updating device in the data updating system according to claim 13, further comprising an identifier storing unit that stores a device identifier for identifying the device itself.

15. The data updating device in the data updating system according to claim 13, further comprising:
a restoration result judging unit that judges pertinence of post-update data restored by the post-update data restoring unit; and
a post-update data writing unit that writes the post-update data on the basis of the judgment of the restoration result.

16. A program for making a computer execute the function of each unit of the data updating device according to anyone of claims 13 to 15.

17. A data updating method for updating data in an electronic device by using update data stored in a portable storage medium, the data updating method comprising steps of:
judging the presence or absence of data update permission when data is updated by a data updating device for carrying out data update processing in the electronic device on the basis of update-frequency data including information on a frequency at which the data update can be carried out by using the update data;
reading the update data on the basis of the data update permission;
updating the update-frequency data when the update data is read by the data updating device on the basis of the data update permission; and
restoring post-update data by using both of the update data and pre-update data or only the update data.

18. A program for making a computer execute each step in the data updating method according to claim 17.
